(19) Europäisches Patentamt
European Patent Office
Office européen des brevets

(11) **EP 4 047 501 A1**

(12) **EUROPEAN PATENT APPLICATION**

(43) Date of publication:
**24.08.2022 Bulletin 2022/34**

(21) Application number: **21305214.5**

(22) Date of filing: **22.02.2021**

(51) International Patent Classification (IPC):
**G06F 30/20** (2020.01)    **G06F 30/27** (2020.01)
**G06F 30/15** (2020.01)    **G06F 111/10** (2020.01)

(52) Cooperative Patent Classification (CPC):
**G06F 30/20; G06F 30/27;** G06F 30/15;
G06F 2111/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TOYOTA JIDOSHA KABUSHIKI KAISHA**
**TOYOTA-SHI, AICHI-KEN 471-8571 (JP)**

(72) Inventors:
• **LE LOUVETEL-POILLY, Julie**
**1140 Brussels (BE)**
• **CRISTIANO, Giampiero**
**1140 Brussels (BE)**
• **MARTIN, Thierry**
**1140 Brussels (BE)**
• **NAGANO, Shota**
**1140 Brussels (BE)**

(74) Representative: **Cabinet Beau de Loménie**
**158, rue de l'Université**
**75340 Paris Cedex 07 (FR)**

(54) **A METHOD FOR CALIBRATING PARAMETERS OF A NUMERICAL MODEL OF A PHYSICAL SYSTEM**

(57)    A method for calibrating parameters of a numerical model of a physical system, comprising:

A) Defining a domain having respective boundaries for the parameters.

B) Obtaining a plurality of points in the domain.

C) At each point, obtaining a score to be associated with said point, said score being determined based on a comparison between the physical system and the numerical model being run at said point according to at least one scenario.

D) Training at least one machine learning model to predict the score within the domain.

E) Using at least one of the at least one machine learning model to find a best scoring point in the domain.

F) Repeating steps B) to E) for a given number of times and/or until a convergence condition is met, with the domain updated at each iteration based on the best scoring point found in the previous iteration.

G) Returning the parameter values of the best scoring point found in the last iteration of step E.

FIG.1

## Description

TECHNICAL FIELD

The present disclosure relates to numerical simulation, and more particularly to a method for calibrating parameters of a numerical model of a physical system. The physical system may be any technical system, notably but not exclusively in the field of transports, such as in the automotive industry.

TECHNOLOGICAL BACKGROUND

Numerical models of physical systems are widely spread as they enable to perform experiments in a much quicker and cheaper way than experiments on the physical systems themselves. However, the models usually rely on many parameters - sometimes close to a hundred - which must be calibrated (i.e. their values must be tuned) for the models to be as accurate as possible.

In previous approaches, calibration could be performed manually by an expert of the associated physical system, based on his knowledge and experience. This would involve significant time and costs.

As an alternative, computer-implemented optimizers have been used. However, these optimizers usually require a large number of simulations and may only lead to a Pareto front, failing to select the best compromise between all the optimal solutions.

SUMMARY

The object of the present invention is to at least substantially remedy the above-mentioned drawbacks.

In this respect, the present disclosure relates to a method for calibrating parameters of a numerical model of a physical system, comprising :

A) Defining a domain having respective boundaries for each of the parameters.
B) Obtaining a plurality of points in the domain, each point comprising a value for each of the parameters.
C) At each point of the plurality, obtaining a score to be associated with said point, said score being determined based on a comparison between the physical system and the numerical model being run at said point according to at least one scenario.
D) Training at least one machine learning model to predict the score within the domain.
E) Using at least one of the at least one machine learning model to find a best scoring point in the domain.
F) Repeating steps B) to E) for a given number of times and/or until a convergence condition is met, with the domain updated at each iteration based on the best scoring point found in the previous iteration.
G) Returning the parameter values of the best scoring point found in the last iteration of step E.

A numerical model is a model, generally computer-implemented, aiming to simulate the behavior of a physical system by solving equations representative of that physical system. A physical system is a system which is governed by physical quantities which may evolve as functions of other physical quantities (e.g. time or temperature). The physical system may also involve technical transformations of some physical quantities (input variables) into other physical quantity (output variables).

The method of the present disclosure may be computer-implemented. This method aims to calibrate at least one, a plurality or all of the parameters of the numerical model. Assuming that N parameters are to be calibrated, the domain defined in step A) may be an N-dimensional domain, wherein each $i^{th}$ dimension (i ranging from 1 to N) is bounded by the boundaries within which the corresponding $i^{th}$ parameter can vary. The boundaries (i.e. the boundary values) may be finite.

In step B), a plurality of points is obtained in the domain. That is, each point is an N-component point comprising, as respective components, a value for each of the parameters. In other words, each point represents a set of parameter values which could be used to calibrate the numerical model.

The at least one scenario mentioned in step C) represents a possible evolution of variables of the physical system, as a function of a given physical quantity (generally time, but it may be any quantity). In practice, a scenario may correspond to one or more input variables and/or limit conditions for the physical system, the numerical model being supposed to predict the behavior of the physical system starting from these input variables and/or limit conditions. The scenario may correspond to an operating point of the physical system, and/or a certain environment of the physical system. A plurality of scenarios may be selected in order to ensure that the numerical model is well calibrated for various corresponding situations of the physical system.

Thus, in step C), the at least one numerical model is given parameter values, namely one point among the plurality of points in the domain, and input variables, namely at least one scenario, and is run to predict the behavior of the physical system in these conditions. On the other hand, the reaction of the actual physical system with the same scenario(s) is known, e.g. thanks to actual experiments carried out separately (either beforehand, afterwards or in parallel). The reaction of the physical system may be observed through measurements.

On that basis, a score can be determined based on a comparison between the output of the numerical model and how the physical system reacts to the scenario (e.g. the measurements). The score may represent the level of match between the numerical model and the physical system with respect to variables of interest. The score is associated to the point, i.e. to the parameter values, insofar as other parameters would have made the numerical model produce another output. In case of a plurality of scenarios, the score may take one, a plurality or all of them into account, as a single aggregated value (e.g. a weighted or unweighted average) or as a multi-component value.

In step D), at least one machine learning model (hereinafter "ML model") is trained to predict the score within the domain. The ML model may be trained on the basis of the aforementioned plurality of points and the available corresponding scores. It is noteworthy that the ML model may have no knowledge of the physical system or the numerical model themselves; it may only be a function trained to "extrapolate" the score within the domain, based on known scores, without knowing what the score represents from a physical perspective.

A machine learning model may comprise one or more mathematical expressions configured to process the domain in order to output information representative of the score in the domain. Weights of the ML model may be iteratively updated by the training method. The ML model may comprise an artificial neural network. An artificial neural network (ANN) is a computational model with one or more neurons, each neuron having a transfer function. The ANN therefore has a global transfer function that allows the calculation of at least one output as a function of at least one input. The neurons may be structured in one or more layers. The transfer functions of each neuron or the relative weights of the neurons in the network can be weighted by coefficients called synaptic weights (or simply weights) and bias. The weights can be modulated according to the learning of the ANN. In principle, learning comprises providing the ANN with a set of situations in which inputs (here, the points) and outputs (here, the scores) are known. During the learning process, the ANN adapts its synaptic weights and biases to conform to the learned situations, possibly with some tolerance. The weights and biases, once determined at the end of the learning phase, may then remain constant or not during the exploitation phase, as will be discussed below.

In step E), at least one of the trained ML models is used to find a best scoring point in the domain. This may be done in a manner known *per se* by the skilled person. The best scoring point may be the point having the highest score, the lowest score, or yet a score closest to a given value, depending on what the score represents and what the score function is.

Finding the best scoring point in the domain amounts to identifying the set of parameters that makes the numerical model give the best result, according to some criteria embodied by the score function.

The best scoring point may be found using one, several or all of the trained ML models. In case more than one ML model are used, it is possible to select a single best scoring point among those found, or to continue the process with a plurality of best scoring points.

In step F), if a given number (possibly predetermined) of iterations has elapsed and/or a convergence condition is met, the method comes to an end and returns some or all of the parameter values of the best scoring point found in the last iteration of step E) (step G)). A convergence condition is a condition indicating that the iterations sufficiently converge so that further iterations hardly bring any improvement (as compared to a set threshold) to the found best scoring point.

Otherwise, the domain initially defined at step B) is updated based on the best scoring point(s), e.g. shifted and/or reduced, to enhance the best scoring point search in the following steps. Then, steps B)-E) are repeated with the updated domain.

During this repetition, in step B), a plurality of points is obtained in the updated domain, which plurality may include previously known points which are still in the updated domain, and/or at least one new point. The running the numerical model in step C) may be performed for the new points only in order to avoid duplicating simulations and thus save computation time, the score for the already known points being merely forwarded from the previous iterations. In step D), the training takes into account the new points, whereby the accuracy of the ML models is generally improved. This in turn improves the prediction of the best scoring point at step E), and so on and so forth until a given number of iterations have been carried out and/or a convergence condition is met.

Therefore, at step G), the returned parameters are normally those which give the closer match between the numerical model and the physical system, at least for the selected scenarios and according to the criteria represented by the score function. Thus, by returning these parameter values, the method provides the values to calibrate the numerical model.

Thanks to the above method, in particular to the use of ML models to predict a best scoring point in the domain and to repeating these steps with better and better trained ML models, a good set of parameter values for calibrating the numerical model can be determined efficiently, without an excessive number of calculations.

Optionally, step D) comprises training a plurality of machine learning models and step E) comprises using at least one most accurate machine learning model among the plurality of machine learning models. In these embodiments, in order to increase the quality of prediction of the ML models, a plurality of them are trained and the most accurate one(s) is used to find (e.g. predict) the best scoring point. Therefore, the finding of the best scoring point is improved and the overall convergence - and thus performance - of the method is enhanced. Accuracy of an ML model may be determined as per the skilled person's requirements.

For instance, optionally, accuracy of a machine learning model is determined through a coefficient of determination. A coefficient of determination provides a measure of how well the determined scores are re-predicted by the ML model, based on the proportion of total variation of scores explained by the ML model. The coefficient of determination may be $R^2$ (R-squared), which is known in the field of statistics. For instance, $R^2$ may

be calculated as $$R^2 = 1 - \frac{\sum(y(x_i)-f(x_i))^2}{\sum(y(x_i)-<y>)^2},$$ where $x_i$ is a point of a test subset of the plurality of points, $y(x_i)$ is the score as evaluated based on the numerical model, $f(x_i)$ is the score as predicted by the ML model, and $<y>$ is an average of the scores $y(x_i)$.

Optionally, the score represents an error between the numerical model and the physical system. The error function, i.e. the function calculating the error, may take into account part or all of the outputs of the numerical model, with possibly different weights being given to different outputs.

Optionally, the function calculating the error is representative of physical principles of the physical system. For instance, the error function may represent the fact that some variables are predominant in some operating conditions of the system, while other variables are predominant in other conditions. Additionally or alternatively, the error function may take into account the sensitivity of the outputs of the numerical model over the parameters and input variables. In other words, the error function may be built in accordance with physical principles or physical laws governing the physical system.

Optionally, the method further comprises, if the best scoring point found at step E) does not belong to the plurality of points, running the numerical model at the best scoring point according to the at least one scenario, updating the score of said best scoring point based on a comparison with the physical system, and if one point of the plurality of points has a better score than the updated score, replacing the best scoring point by said one point.

In these embodiments, if a new point is identified by an ML model as the best scoring point, the score of this point is validated by running the numerical model at this point, in order to get not only the predicted score thereof but a more reliable score. Based on this validation, the score of the best scoring point is updated. Following this update, the best scoring point may not be the best scoring point anymore, because its score value has changed. If it is still the best scoring point, then it is kept as such. Otherwise, there must be at least one another point which has a better score; the best scoring one of these other points is kept as the best scoring point, in place of the predicted best scoring point.

Thanks to this validation and possible update, the best scoring point is identified with more accuracy, which enhances even more the performance of the method. In addition, running the numerical model on one further point is interesting insofar as it increases the training set for the ML models at the following iterations of step D), especially in a region of the domain where the optimal point is expected to be found.

Optionally, the method further comprises returning a correlation information between the score and at least one of the parameters. The method may comprise returning a correlation information between the score and one, several or all the parameters. The correlation information may indicate to what extent the score depends on a given parameter; in other words, the correlation information may provide the relative influence of a given parameter in the score prediction. Such correlation information is useful to understand the physical system and possibly tune it, and can be rather easily derived from at least one of the ML models. Thanks to the correlation information, the numerical model can be calibrated with great accuracy and easily even if the physical system is modified.

Optionally, a size of the domain is reduced between at least two successive iterations of steps B) to E). Thus, from the first one of these iterations to the second one, the steps are repeated on a smaller domain, and therefore the resolution of the method improves. This makes convergence faster and the returned parameter values more accurate. Note that the size of the domain may be reduced at each successive iteration of steps B) to E). Besides, a size of the domain may be reduced while the domain is at least partly shifted, so that the updated domain may contain points which were not in the previous domain. Some overlap between the domain before and after update is nevertheless desired.

Additionally or alternatively, optionally, a size of the domain is reduced between successive iterations of steps B) to E) unless it lessens accuracy of the machine learning model used at step E). In these embodiments, the accuracy of the ML model used at step E) is checked at each iteration, possibly using the aforementioned coefficient of determination. If, at a given iteration, this accuracy is worse than at the previous iteration, the method may continue the iteration with the domain as it was in the previous iteration (i.e. before its latest update), yet with at least one new point in that domain in order to improve the accuracy of the ML models.

Optionally, in step B), the plurality of points comprises at least one new point which was not in the plurality of points at the previous iteration of step B). For the first occurrence of step B), all points are new, as there were no points before. In adding at least one new point at each iteration, the training set for training the ML models is completed and the performance of the ML models is improved. In combination with the update of the domain, the new points are mostly added in the region of the domain where the optimal point is expected to be found, thereby increasing the density of points (only) in the relevant region.

Optionally, the physical system is a vehicle component, such as a vehicle catalyst or a vehicle engine. Other examples are possible.

Optionally, at least one of the parameters has the dimension of at least one of a temperature, a thermal flux, a pressure, an energy, a concentration, an amount of substance, a reaction rate, a time, a length, a mass, or a combination of these dimensions. These parameters are typical of a numerical simulation of a physical system. The dimension here refers to physical dimension, i.e. the combination of base quantity (such as length, mass, time, and electric charge), as generally expressed by a unit of measure (such as miles or kilometers for length, pounds or kilograms for mass, etc.), as opposed to the dimensions of the domain, which are the independent directions within the domain.

The present disclosure is further related to a computer program including instructions for executing the steps of the above described method for detecting calibrating parameters of a numerical model of a physical system when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method for calibrating parameters of a numerical model of a physical system. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

The invention and advantages thereof will be better understood upon reading the detailed description which follows, of embodiments given as non-limiting examples. This description refers to the appended drawings, wherein:

- Fig. 1 is a diagram illustrating steps of a method for calibrating a numerical model of a physical system according to an embodiment.
- Fig. 2 is a diagram representing successive updates of the domain in the method of Fig. 1.

DETAILED DESCRIPTION OF EMBODIMENTS

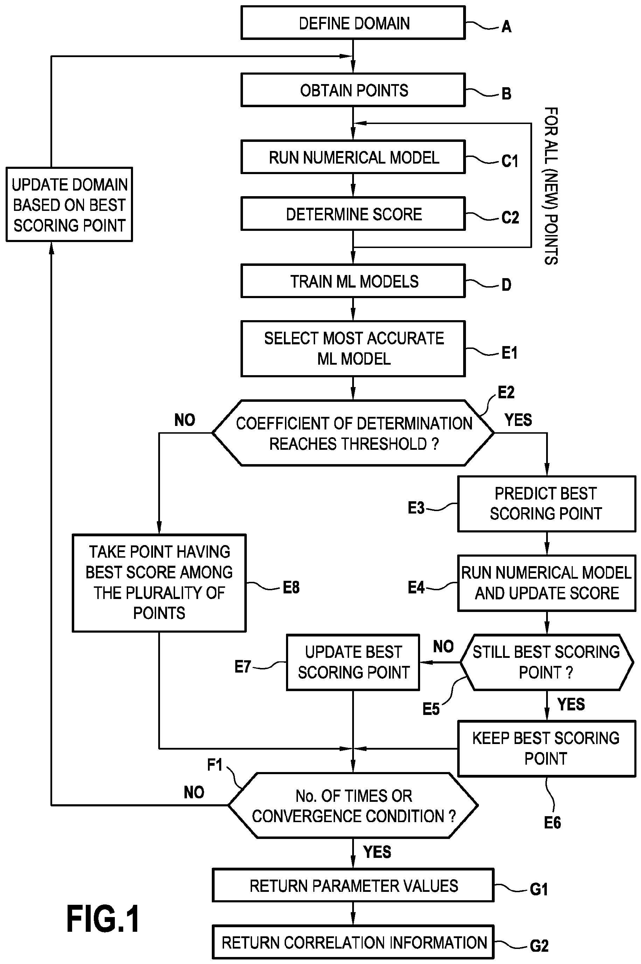

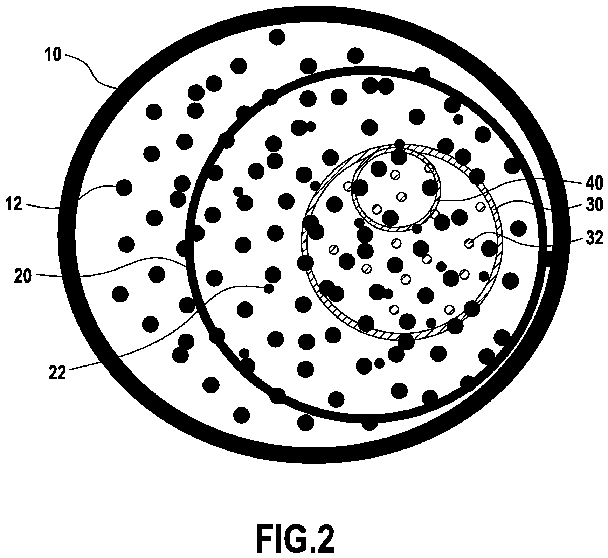

A method for calibrating a numerical model of a physical system according to an embodiment is described with reference to Figs. 1 and 2.

In the present embodiment, the physical system may be a vehicle catalyst, e.g. a three-way catalyst for an automotive vehicle. A numerical model for such a three-way catalyst may be a detailed chemical model aiming to estimate the chemical reactions within the catalyst. For instance, the catalyst may be divided in two zones. For each zone, the numerical model should evaluate two storage amounts and twenty-one reactions (such as PGM (Platinium group metal) reactions, Ce (bulk Cerium) reactions, fCe (fast Cerium) reactions), each reaction having two parameters to calibrate. This amounts to 88 parameters to calibrate. The reactions may be evaluated on the Arrhenius formula ($k=A*exp(-Ea/RT)$), where A (having the dimension of a reaction rate, e.g. corresponding to a reaction rate pre-exponential factor) and Ea (having the dimension of an energy, e.g. corresponding to an energy of reaction activation) are parameters. More generally, the parameters may have the dimension of at least one of a temperature, a thermal flux, a pressure, an energy, a concentration, an amount of substance, a reaction rate, a time, a length, a mass, or a combination of these dimensions. For instance, the parameters may comprise at least one of a heat-losses inlet cone, an internal heat transfer (catalyst channels), an initial canning temperature, a washcoat density, a heat radiation between catalyst front and rear faces, a nonuniform washcoat distribution and a catalyst axial heat conduction. The variables of the numerical model to monitor may also be chosen among these types of physical quantities. For instance, the variables may be the amounts of substance of different species, e.g. three species such as NO, C3H6 and CO.

However, the method below may apply to other physical systems, for instance other vehicle components, such as a vehicle engine.

If test results are not already available, calibration experiments may be run on the physical system itself according to one or more scenarios on which it is desired to calibrate the numerical model. The scenarios may be representative of situations in which the physical system is to operate.

The steps of the method according to the present embodiment are illustrated in Fig. 1. The method for calibrating the numerical model starts with identifying the parameters to be calibrated, and, in step A, defining a domain having respective boundaries for each of the parameters. An example of an initial domain 10 is shown in Fig. 2. Although Fig. 2 represents the domain 10 in two dimensions, the domain may have as many dimensions as the number of parameters to calibrate. Further, the domain 10 is illustrated as a circle for simplicity, but the domain 10 may have any shape. In particular, the boundaries need not be the same, or define ranges of the same size, for the different dimensions. However, the different dimensions of the domain 10 may be normalized such that the boundaries define ranges of the same size for the different parameters: in this way, the domain 10 may be simply defined by a center and a radius, the radius being the same for all the dimensions. In general, the radius may vary over the dimensions.

Once a domain is defined, points are obtained in the domain in step B. Each point comprises a value for each of the parameters, i.e. for each dimension of the domain. A plurality of points 12 is represented by large solid dots in Fig. 2. These points may be obtained randomly and/or chosen according to a particular pattern.

The number of points may be predetermined, or points may be added one after the other until they reach a sufficient density in all the regions of the domain.

Then, as explained before, the numerical model is run, taking the parameter values of one point as parameters, and according to at least one scenario (step C1 in Fig. 1). The scenario may correspond to the scenario for which test results on the physical system have been obtained.

Then, in step C2, a score is determined and associated with said point based on a comparison between the results of the numerical model and the results of the physical system. The score may represent an error of the numerical model as compared to the physical system.

For instance, with the three-way catalyst, it may be desired that the numerical model captures particular targets. In a first example, for estimating the amount of substance of nitrogen monoxide NO in rich light off, it is possible to perform a plurality of separated root mean square error (RMSE) evaluations and sum these evaluations with different weights. In this example, the error function may be computed as f=RMSE(t10, t50, t90) + 0.3*RMSE(t25, t75, t95), where 'txx' represents the time of the flow when the conversion efficiency of the catalyst reaches xx%. As can be seen, six targets were divided into primary targets (t10, t50, t90) and secondary targets (t25, t75, t95), the secondary targets having a relatively reduced importance, here represented by a factor (weight) 0.3.

In a second example, it is desired to calibrate the numerical model based not only of one species but a plurality of species, here NO, HC and CO. Each species is monitored in the form of an amount of substance evolving as a function of time. In this example, the error function may be computed as f=0.2*RMSE(NO) + RMSE(HC) + RMSE(CO), where RMSE is conventional root mean square error calculated for each curve separately. In the above formula, note that RMSE(NO) is given a relatively reduced importance, here by a factor (weight) 0.2. In this case, this is because NO is of secondary importance for light-off in lean atmosphere, because its evolution with time is non-monotonic and therefore less reliable for calibrating the numerical model.

In either case, it is understood that the function calculating the error is representative of physical principles of the physical system. It is noted that although it requires some basic knowledge of the physical system, defining an appropriate error function is much more accessible and much less time-consuming that making an expert fully calibrate the numerical model.

Also, as shown above, a single scoring function may be defined even if different targets are used to check the calibration. The targets can be appropriately combined thanks to the weights, and the single scoring function ensures that the method defines a single best result, and not a Pareto front among which the best compromise is to be individuated manually.

Likewise, a single scoring function may be defined even if a plurality of scenarios is used to compare the numerical model and the physical system. In such case, a global scoring function may be estimated as a weighed sum of the scoring functions of the respective scenarios.

Steps C1 and C2 are repeated for all points, such that every point is associated with a score.

The method then proceeds to step D, comprising training of at least one machine learning model, preferably a plurality of ML models, to predict the score within the domain. The skilled person may select any appropriate ML models, e.g. among Gaussian process Regressors, Neural networks, Decision Tree Regressors, Boosted Trees Regressors, Linear Regressor, etc., without limitation of the ML model type. The selected ML models should be suitable for predicting a score of a given point in the domain.

The skilled person may also select any appropriate training method for training an ML model. In an example, the ML model takes all the available points and corresponding scores as an input, and performs at least one, preferably several, e.g. five, cross score validations (train/test) in order to train and evaluate the accuracy of the ML model. Cross score validations are known *per se* in the art of machine learning. The train and test sets may represent 70% and 30% of the available data, respectively.

Then, at least one of the trained ML model(s) is used to find a best scoring point in the domain. First, if several ML models have been trained, it is possible to carry out the following steps only with the most accurate ML model. For instance, accuracy may be determined through a coefficient of determination such as R2. In the present embodiment, based on the cross score validations, the R2 accuracy of an ML model may be calculated as the average of the R2 accuracy for each of the cross score validations. Thus, in step E1, the ML model which has the highest coefficient of determination is selected.

Optionally, it is checked at step E2 whether that coefficient of determination reaches a threshold, which may be predetermined. The idea is to check whether the ML model, regardless of it being the most accurate one among all the trained ML models, is reliable enough to find a best scoring point. In case it is not (NO in step E2), the method proceeds to step E8 where the best scoring point is simply chosen among the plurality of points, as the point having the best score determined in step C2.

On the other hand, if the ML model is reliable enough (YES in step E2), the method proceeds to step E3, which is the core of predicting the best scoring point in the domain using the most accurate ML model. As mentioned above, predicting a best scoring point based on a trained ML model is known *per se* in the art, and can be performed by the skilled person in any suitable manner. In one example, the ML model may be used to predict a surface of the score within the domain and then identify, on that surface, the best scoring point in the domain.

The method proceeds further to step E4, which is optional. In step E4, the predicted best scoring point is validated, i.e. its score is updated by running the numerical model at the best scoring point according to the at least one scenario. Of course, in the rare case in which the predicted best scoring point belongs to the plurality of points on which the numerical model has already been run, it is unnecessary to run it again. Otherwise, the best scoring point may be added to the plurality of points, with its corresponding score after validation and update.

It may happen that, after the score of the best scoring point has been updated based on an output of the numerical model and a comparison with the physical system (e.g. in the same way as determining the score for the initial points, such as through the error function), the updated best scoring point is not the best scoring point any more. This is checked in step E5. This means that one point of the plurality of points may have a better score than the updated score. If it is not the case and the updated best scoring point is still the best scoring point (YES in step E5), the method proceeds to step E6 and the updated best scoring point is retained as the best scoring point. Otherwise (NO in step E5), the method proceeds to step E7 in which the best scoring point is replaced by the one of the plurality of points which has the best score.

It is noted that steps E5-E7 are optional too and not relevant if step E4 is not carried out, or if the score of the predicted best scoring point is not recalculated in any other way.

The output of steps E6, E7 or E8, depending on the way followed by the method, is thus a best scoring point, i.e. a set of parameter values (a point) which has, for instance, the lowest error in all the evaluated points.

At this stage, the method proceeds to step F1, where it is checked whether a certain number of iterations have been performed and/or a convergence condition is met. The certain number of iterations may be predefined. The convergence condition may be a condition expressing that the score shows little improvement over the successive iterations. For instance, the convergence condition may be that the difference between the score at this iteration and the score at the previous is less than a predetermined threshold. As another example, the convergence condition may be that the distance between the best scoring point at this iteration and the best scoring point at the previous iteration is less than a predetermined threshold. As another example, the convergence condition may be that the ML model accuracy exceeds a predetermined threshold. The convergence condition may comprise a combination of conditions, e.g. using Boolean operators such as AND, OR, NOT, etc.

In some embodiments, combining both conditions, i.e. a maximum number of iterations and a convergence condition, enables to limit the total number of iterations while also avoiding unnecessary iterations. Therefore, computational resources are spared.

Whatever the condition set by the skilled person at step F1, if that condition is not met (NO in step F1), the method proceeds to step F2, in which the domain is updated based on the best scoring point found in the latest iteration. For instance, as shown in Fig. 2, an updated domain 20 is defined. As can be seen, the updated domain 20 has a reduced size with respect to the domain 10 at the previous iteration. In this example, the updated domain has its size reduced, preferably in every dimension, by a predetermined factor, and is centered so as to include the best scoring point. The predetermined factor may be constant or not over the iterations; for example, the predetermined factor may vary exponentially. Besides, for instance, the center of the updated domain may be the middle of the center of the domain at the previous iteration and the best scoring point. More generally, the updated domain may, entirely or not, overlap the domain at the previous iteration.

In some cases indeed, the found best scoring point may be relatively close to a boundary of the domain, which would suggest that better scoring points may be found over the boundary. These cases may be dealt with by updating the domain to cross the boundary of the previous domain, even if its size is overall reduced. For instance, this may be done by appropriately tuning how the center of the updated domain is determined, with respect to the factor by which its size is reduced. However, other approaches are possible, such as defining a minimum distance to the best scoring point and ensuring that the boundaries of the domain are not brought closer to the best scoring point than the minimum distance.

Step F2 leads the method back to step B, where a plurality of points is obtained. The plurality of points may include the points of the previous iteration(s) which are still in the updated domain. In addition or alternatively, the plurality of points may comprise at least one new point which was not in the plurality of points at the previous iteration of step B. In Fig. 2, these new points 22 are represented by small solid dots. As illustrated, the updated domain, in this embodiment, comprises both large solid dots (points from the previous iteration) and small solid dots (points added at this iteration).

In an iteration of step C, the numerical model may be run only for the added points, for which a score has not been determined before. Otherwise, determination of the score for the new points may be the same as for the previous iterations.

In an iteration of step D, the at least one ML model may be trained to predict the score only within the updated domain. Since this updated domain is focused on an expected best scoring region, better results are expected for the ML models.

However, it may happen that, due to the distribution of the points within the updated domain, the accuracy of the most accurate ML model worsens as compared to the previous iteration. In these cases, it may be decided to use the domain of the previous iteration instead of the updated domain. In other words, a size of the domain may be reduced between successive iterations of steps B) to E) unless it lessens accuracy of the machine learning model used at step E).

Note that the accuracy threshold of step E2 may be fixed or vary from an iteration to another. For instance, the threshold of step E2 may be the accuracy (e.g. coefficient of determination $R^2$) of the most accurate ML model at the previous step. In these embodiments, step E2 guarantees that accuracy of the ML models is better at each iteration.

The ML model which is identified as the most accurate one at a given iteration may not be the same as the ML model identified as the most accurate one at previous iterations. Thus, having a plurality of ML models at hand enables to automatically select the ML model that best adapts to the distribution of points in the domain.

When the ML models are not accurate enough (NO in step E2), the ML models are not used strictly speaking to find a best scoring point. Nevertheless, they are used insofar as one of them must be used at other iterations of step E), notably when one of them becomes accurate enough (YES at step E2).

The method proceeds so forth and so on: as shown in Fig. 2, a subsequent updated domain 30 is determined, in which new points 32 are obtained (white striped dots in Fig. 2), and another subsequent domain 40, etc.

When the condition of step F1 is met (YES in step F1), the iterations are stopped and the method proceeds to step G1, of returning the parameter values of the best scoring point found in the last iteration of step E (E1-E8). These values can then be used to calibrate the numerical model.

Optionally, before, at the same time or, as illustrated, after returning the parameter values, the method may also return a correlation information between the score and at least one of the parameters. The correlation information may be linear correlation information. The correlation information may be determined based on a correlation study of the numerical model over part or all of the plurality of points. The correlation information can be easily derived from the plurality of points since the respective scores of the points are already available.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Besides, although steps have been presented in a certain order, this order may vary as long as it remains compatible with the flow of data from one step to another. Therefore, the description and the drawings should be considered in an illustrative rather than in a restrictive sense.

**Claims**

1. A method for calibrating parameters of a numerical model of a physical system, comprising:

   A) Defining a domain (10, 20, 30, 40) having respective boundaries for each of the parameters.
   B) Obtaining a plurality of points (12, 22, 32) in the domain, each point comprising a value for each of the parameters.
   C) At each point of the plurality, obtaining a score to be associated with said point, said score being determined (C2) based on a comparison between the physical system and the numerical model being run (C1) at said point according to at least one scenario.
   D) Training at least one machine learning model to predict the score within the domain.
   E) Using at least one of the at least one machine learning model to find a best scoring point in the domain.
   F) Repeating steps B) to E) for a given number of times and/or until a convergence condition is met (F1), with the domain updated (F2) at each iteration based on the best scoring point found in the previous iteration.
   G) Returning the parameter values of the best scoring point found in the last iteration of step E (G1).

2. The method of claim 1, wherein step D) comprises training a plurality of machine learning models and step E) comprises using at least one most accurate machine learning model among the plurality of machine learning models.

3. The method of claim 2, wherein accuracy of a machine learning model is determined through a coefficient of determination.

4. The method of any one of claims 1 to 3, wherein the score represents an error between the numerical model and the physical system.

5. The method of claim 4, wherein the function calculating the error is representative of physical principles of the physical system.

6. The method of any one of claims 1 to 5, further comprising, if the best scoring point found at step E) does not belong to the plurality of points, running the numerical model at the best scoring point according to the at least one scenario, updating the score of said best scoring point based on a comparison with the physical system (E4), and if one point of the plurality of points has a better score than the updated score (E5), replacing the best scoring point by said one point (E7).

7. The method of any one of claims 1 to 6, further comprising returning a correlation information between the score and at least one of the parameters (G2).

8. The method of any one of claims 1 to 7, wherein a size of the domain (10, 20, 30, 40) is reduced between at least two successive iterations of steps B) to E).

9. The method of any one of claims 1 to 8, wherein a size of the domain (10, 20, 30, 40) is reduced between successive iterations of steps B) to E) unless it lessens accuracy of the machine learning model used at step E).

10. The method of any one of claims 1 to 9, wherein in step B), the plurality of points comprises at least one new point (22, 32) which was not in the plurality of points at the previous iteration of step B).

11. The method of any one of claims 1 to 10, wherein the physical system is a vehicle component, such as a vehicle catalyst or a vehicle engine.

12. The method of any one of claims 1 to 11, wherein at least one of the parameters has the dimension of at least one of a temperature, a pressure, an energy, a concentration, an amount of substance, a reaction rate, a time, a length, a mass, or a combination of these dimensions.

13. A computer program including instructions for executing the steps of a method according to any one of claims 1 to 12 when said program is executed by a computer.

14. A recording medium readable by a computer and having recorded thereon a computer program including instructions for executing the steps of a method according to any one of claims 1 to 12.

**FIG.1**

FIG.2

Europäisches
Patentamt

European
Patent Office

Office européen
des brevets

# EUROPEAN SEARCH REPORT

Application Number

EP 21 30 5214

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/027021 A1 (SASTRY KUMARA [US] ET AL) 23 January 2020 (2020-01-23) <br> * the whole document * <br> * paragraph [0061] - paragraph [0064] * <br> * paragraph [0068] - paragraph [0069] * <br> * paragraph [0018] - paragraph [0021] * <br> * paragraph [0054] * <br> * paragraph [0071] * <br> ----- | 1-14 | INV.<br>G06F30/20<br>G06F30/27<br>G06F30/15<br><br>ADD.<br>G06F111/10 |
| X | DAN LEVI ET AL: "Evaluating and Calibrating Uncertainty Prediction in Regression Tasks", ARXIV.ORG, CORNELL UNIVERSITY LIBRARY, 201 OLIN LIBRARY CORNELL UNIVERSITY ITHACA, NY 14853, <br> 28 May 2019 (2019-05-28), XP081365538, <br> * the whole document * <br> * page 2, paragraph 2 * <br> * page 4, paragraph 6 * <br> * page 5, last paragraph - page 6, paragraph 7 * <br> ----- | 1-14 | |
| X | CN 110 619 393 A (UNIV SHANGHAI JIAOTONG) 27 December 2019 (2019-12-27) <br> * the whole document * <br> * paragraph [0001] * <br> * paragraph [0015] - paragraph [0021] * <br> * paragraph [0121] - paragraph [0122] * <br> * paragraph [0134] - paragraph [0140] * <br> * paragraph [0199] - paragraph [0209] * <br> ----- <br><br> -/-- | 1-14 | TECHNICAL FIELDS SEARCHED (IPC)<br><br>G06F |

The present search report has been drawn up for all claims

| Place of search | Date of completion of the search | Examiner |
|---|---|---|
| Munich | 23 July 2021 | Wellisch, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 21 30 5214

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FRANKLIN ABODO ET AL: "Strengthening the Case for a Bayesian Approach to Car-following Model Calibration and Validation using Probabilistic Programming", ARXIV.ORG, CORNELL UNIVERSITY LIBRARY, 201 OLIN LIBRARY CORNELL UNIVERSITY ITHACA, NY 14853, 7 August 2019 (2019-08-07), pages 1-8, XP081457356, * the whole document * * page 1, column 2, paragraph 1 * * page 2, column 1, paragraph 2 * * page 3, column 2, paragraph 3 - page 4, column 2, paragraph 2 * ----- | 1-14 | |

TECHNICAL FIELDS
SEARCHED    (IPC)

The present search report has been drawn up for all claims

| Place of search | Date of completion of the search | Examiner |
|---|---|---|
| Munich | 23 July 2021 | Wellisch, J |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 21 30 5214

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2021

| Patent document cited in search report | | Publication date | Patent family member(s) | Publication date |
|---|---|---|---|---|
| US 2020027021 | A1 | 23-01-2020 | NONE | |
| CN 110619393 | A | 27-12-2019 | NONE | |

EPO FORM P0459

For more details about this annex : see Official Journal of the European Patent Office, No. 12/82